# EUROPEAN PATENT SPECIFICATION

(11) **EP 2 595 794 B1**
(45) Date of publication and mention of the grant of the patent: **06.03.2019**
(21) Application number: 11738167.3
(22) Date of filing: 19.07.2011
(51) Int. Cl.: B29C 63/02, B32B 37/10, B44C 1/16

(54) **DEVICE FOR APPLYING A PATTERN ON A SUPPORT MEANS**
VORRICHTUNG ZUR APPLIKATION EINES MUSTERS AUF EINEM SUBSTRAT
DISPOSITIF POUR APPLIQUER UN MOTIF SUR UN SUPPORT

(30) Priority: 19.07.2010 EP 10007469
(43) Date of publication of application: 29.05.2013
(73) Proprietor: Rapid Applicator B.V., 5151 DK Drunen (NL)
(72) Inventor: VERMEULEN, M, NL-Drunen 5151 DK (NL); KLERKS, J.J.M, NL-Drunen 5151 DK (NL)
(74) Representative: Ishiguro, Masaoki
(86) International application number: PCT/EP2011/003602
(87) International publication number: WO 2012/010289

(56) References cited:
- EP-B1- 0 986 459
- US-A- 3 323 454
- US-A- 3 671 362

## Description

The present invention relates to a device for applying a predetermined pattern onto a support means, the device comprising:
- a laminating table having a flat laying-out surface;
- a first movable device being moveably arranged at a first fixed control and carrier section, the first fixed control and carrier section being arranged at a first long side of the laminating table;
- a second movable device being moveably arranged at a second fixed control and carrier section, the second fixed control and carrier section being arranged at a second long side of the laminating table, the second long side of the laminating table being opposite and substantially parallel to the first long side of the laminating table;
- a press device comprising at least one press roll rotatably journalled at its ends and operating and control means for moving the press roll between an upper inoperative position and a lower operative position in contact with the surface of the table and for controlling the pressure of the press roll against the table surface.

Such a device is disclosed in EP 0 986 459. The device disclosed in EP 0 986 459 is characterized in that it comprises a traverse beam spanning the laying-out surface, connecting the first and second movable devices as bridge and causes the movable devices to move in a synchronized parallel way during a process of laminating a substrate.
A disadvantage of the known device is that perfect synchronized running of the first and the second movable devices is difficult to obtain, especially when the device is operated by one person standing at one long side of the laminating table. In the device of EP 0 986 459, the synchronization of the running of the first and the second movable device is achieved by a horizontal traverse beam arranged above the laminating table and connecting the first and the second movable devices via two substantially vertical pillars. By moving the first movable device, the motion is transmitted to the second movable device via the substantially vertical pillars and the horizontal traverse beam, and vice versa. Due to torsion of the horizontal traverse beam, the running of the second moveable device is poorly synchronized with the running of the first moveably device. The result of this is that the press roll runs unevenly across the pattern to be applied onto the substrate in the laminating process, which in turn leads to poorly transferred patterns, resulting in signs of inferior quality.

Another disadvantage of the known device is that during applying the pattern onto the substrate, the foil bearing the pattern has to be inserted between the press roll and the horizontal traverse beam. Especially with large foils this step may cause damaging of the foil. The inconvenience of performing this step also leads to decreased productivity of the person operating the device.

US3671362 describes an apparatus for applying a continuous sheet of a wall covering material to a wall panel including a table for supporting the panel in a horizontally disposed position, and a carrier which carries a roll of the covering material, an adhesive spray system, and a machine driven rotatable brush. Rails extend along opposite sides of the table and are engaged by rollers on the carrier, which is moved along the rails by a cable and sheave arrangement. As the carrier moves along the rails, and hence, over the surface of the panel supported on the table, adhesive is sprayed on the panel upper surface, the sheet material is unrolled, and the rotating brush presses the sheet material against the adhesive covered panel surface. The carrier is mounted above the supporting table and includes pairs of downwardly extending legs. Each of the legs also has rotatably mounted at its lower end a roller which is formed with a V-shaped groove complementary to the shape of the track and engageable therewith. The apparatus is for applying a non-self adhesive covering material on a panel. The structure of the legs and the track allow a limited force to be applied by the rotating brush.

It is therefore an object of the present invention to provide a device for applying a predetermined pattern onto a support means that omits the above stated disadvantages, and provides excellent signs which can be produced in a highly efficient and reliable manner.

In the context of the present invention, a predetermined pattern is broadly construed as being a single colored (uni-color) image, for example a solid area colored with a single color; or an image, which for example can be produced with screen printing or digital printing. Examples of digital printing techniques are thermal transfer printing and various ink-jet technologies, for example wet solvent ink-jet printing, UV-curable ink-jet printing, hotmelt ink-jet printing.
- The object is achieved by providing a device for applying a predetermined pattern onto support means according to claim 1.

The device comprises a transmission means having a first rotating member and a second rotating member connected by a first transporting means and a second transporting means; the first rotating member being arranged at a first short side of the laminating table and substantially perpendicular to the first long side of the laminating table; the first rotating member having a first end portion and a second end portion; the second rotating member being arranged at a second short side of the laminating table and substantially parallel to the first rotating member; the second rotating member having a first end portion and a second end portion; the first transporting means being moveably arranged to run over the first end portion of the first rotating member and the first end portion of the second rotating member and fixedly connected to the first movable device; the second transporting means being moveably arranged to run over the second end portion of the first rotating member and the second end portion of the second rotating member and fixedly connected to the second movable device and wherein at least one of the predetermined pattern or support means is self adhesive.

Preferably, the number of the press role of the press device is one. Since the device according to the present invention is for applying a predetermined pattern onto a support means, wherein at least one of the predetermined pattern or the support means is self adhesive, the contacting of the pattern with the support means and the application of the pressure are preferably performed in one step. Any wrinkles and air bubbles formed upon the first contact are difficult to remove in subsequent steps in case of application of a self-adhesive predetermined pattern or a pattern on a self adhesive support means.

The transmission means according to the present invention provides a smooth and highly accurate transmission of the movement of the first movable device to the second movable device.

With such an arrangement, the horizontal traverse beam connecting the first and the second movable device is no longer necessary to provide parallel and synchronized running of both movable devices. The new transmission means according to the present invention solves or at least mitigates the torsion problem of the conventional movable devices bridged by a horizontal traverse beam.
During the process of applying a pattern onto a substrate, a foil bearing a pattern, e.g. printed with an ink-jet printer, does not have to be inserted between the press roll and the horizontal traverse beam anymore, but can be easily flipped over the press roll. Hence it becomes easier to operate the laminating device by a single person and with a higher productivity of that single person.

Such a device may be used for applying a predetermined pattern, which may be a print on a foil, a laminate or vinyl. The foil, laminate or vinyl may be self-adhesive.

In an embodiment, the first movable device and the second movable device may be linearly movable devices. The movable devices run in a linear way along the long sides of the laminating table.

In an embodiment, the first rotating member and the second rotating member, comprise rotating elements being fixedly connected to the end portions of the first and second rotating members.

In an embodiment the rotating elements comprise gearwheels.
This embodiment has the advantage that the accuracy of the synchronization of the running of the first movable device and the second movable device can be adjusted to the desired accuracy level by selecting the gearwheels accordingly. Gear wheels having a larger diameter combined with a larger number of teeth increase the accuracy level of the transmission means.

In an embodiment, the first transporting means and the second transporting means of the device according to the present invention are selected from the group consisting of: a belt, a toothed belt, a chain and a ribbon.

In an embodiment the flat laying-out surface of the laminating table of the device according to the present invention comprises at least two flat plates.
An advantage of having multiple plates is that plates may be substituted or handled by a single person.

The at least two flat plates may be of any suitable plate material, for example wood, metal (e.g. steel, aluminum), glass or a polymer plate material (e.g. polymethylmethacrylate, polyvinylchloride).

In an embodiment the at least two flat plates of the flat laying-out surface of the laminating table are made of a translucent material, preferably the at least two flat plates are made of glass, more preferably of security or annealed glass.

An advantage of this is that the working area can be lit from the back.

In an embodiment each plate is supported by at least three supporting elements (50), of which at least two are adjustable, such that the plate can be leveled.

In an embodiment at least one of the supporting elements per plate is adjustable for leveling the plate.

In an embodiment the support elements comprise a profile having a rubber strip extending along the width of the device.

In an embodiment the supporting elements are made of an elastomeric material.

In an embodiment, the device according to the present invention, comprises a first means for extending the length of the laminating table, comprising a first extending arm and a second extending arm, both extending arms being movably arranged at the first short side of the laminating table, the first means for extending the length of the laminating table optionally comprising a first support means.

In an embodiment, the device according to the present invention, comprises a second means for extending the length of the laminating table, comprising a third extending arm and a fourth extending arm, both extending arms being movably arranged at the second short side of the laminating table, the second means for extending the length of the laminating table optionally comprising a second support means.

An advantage of these arrangements is that the operating length of the laminating table can be extended without the need for a longer laying-out surface of the laminating table. The substrates may be supported by the arrangement of extending arms, so longer patterns may be applied to longer substrates. With this arrangement it is also possible that long patterns may be more easily applied to multiple panels without the need of a partial image overlap. A first part of the pattern may be applied to a first panel, which may be moved on and supported by the first or the second support means of the means for extending the length of the laminating table. Then a second part of the pattern may be applied to a second panel, positioned against the first panel. After applying the second part of the pattern on the second panel, the first and second parts of the pattern can be separated by cutting in between the first and the second panel. Of course this principle can also be applied to multiple panels.

In an embodiment, the device according to the present invention, comprising a first holder arranged at the first movable device and a second holder arranged at the second movable device, the first holder and the second holder being arranged for accommodating a third rotating member.

In an embodiment, the device according to the present invention, the third rotating member comprises an axis for holding a roll of sheet material.
The invention will now be described in detail with reference to the following Figures.
FIG. 1A shows a schematic representation of an embodiment of a device for applying a predetermined pattern onto a support means according to the present invention.
FIG. 1B shows a detail of Fig. 1A, indicated with A.
FIG. 1C shows a schematic representation of a movable device of the device of Fig. 1A.
FIG. 2A schematically shows a top view of the device shown in Fig. 1.
FIG. 2B schematically shows a detail of the top view shown in Fig. 2A, indicated with Q.
FIG. 2C schematically shows a side view of the detail of Fig. 2B.
FIG. 3 schematically shows a cross sectional view along line B-B of the device shown in FIG. 2.
FIG. 4 schematically shows an enlarged detailed partial view of FIG. 3.
FIG. 5 shows a schematic representation of an embodiment of a device for applying a predetermined pattern onto a support means according to the present invention
FIG. 6A schematically shows a top view of the device shown in FIG. 5.
FIG. 6B schematically shows a detail of the top view shown in FIG. 6A, indicated with R.
FIG. 6C schematically shows a side view of the detail of FIG. 6B.
FIG. 7 schematically shows a cross sectional view along line D-D of the device shown in FIG. 6.
FIG. 8 schematically shows an enlarged detailed partial view of FIG. 7.

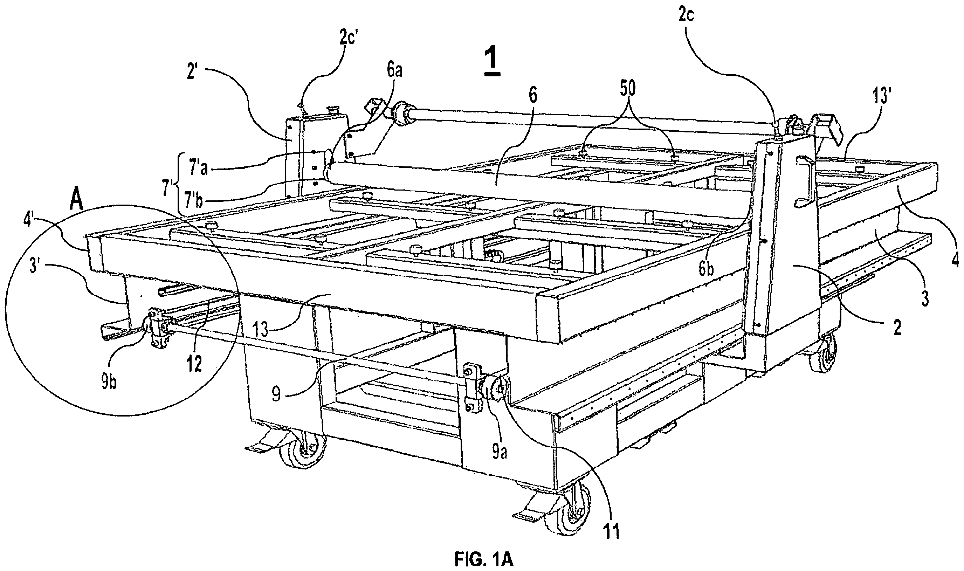

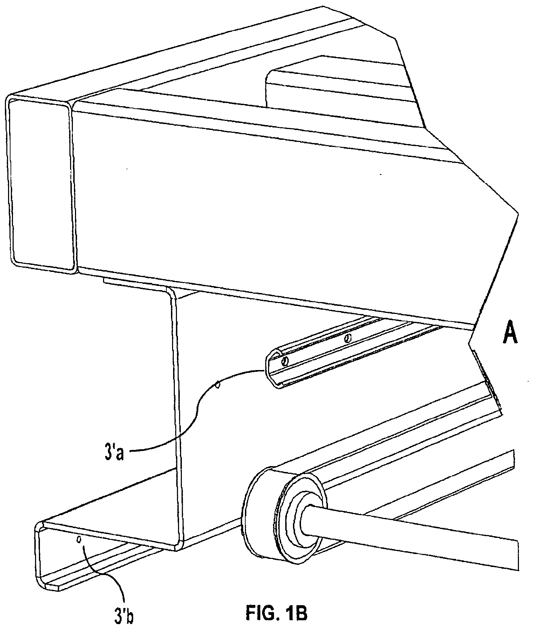

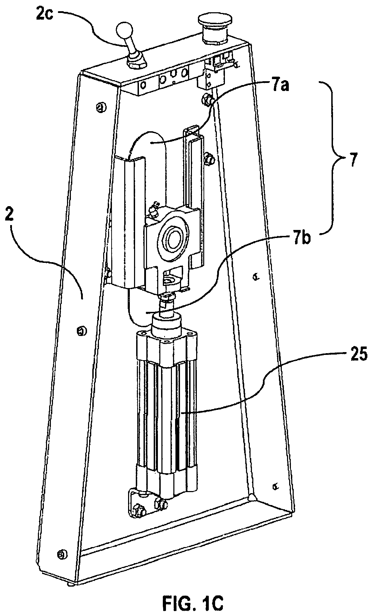

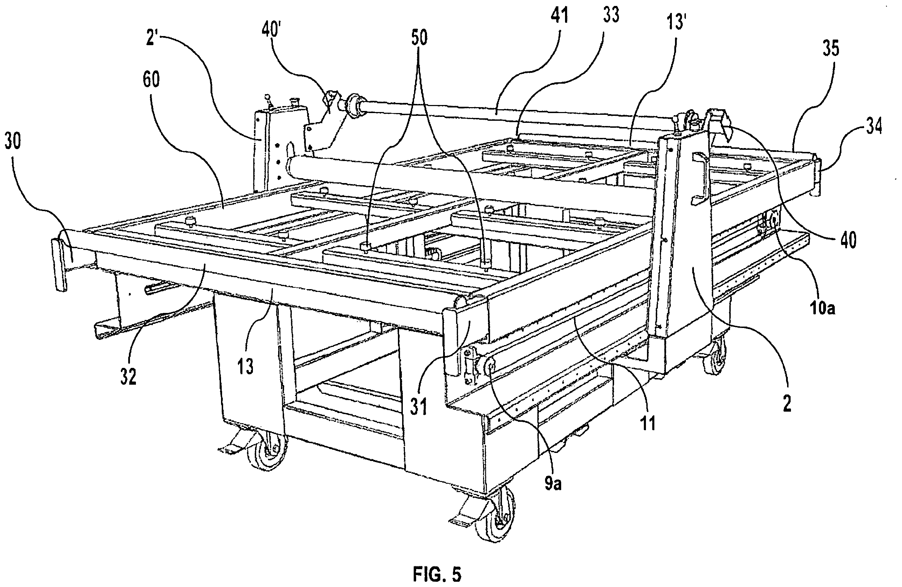

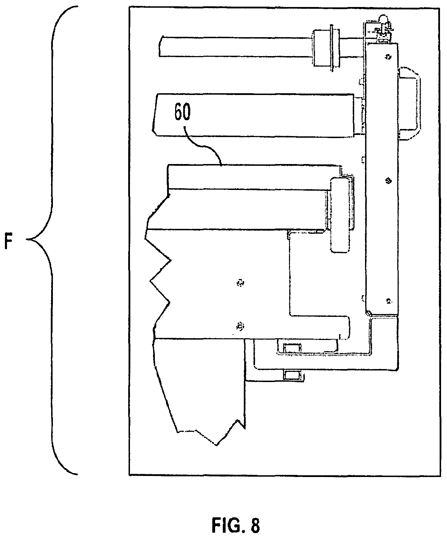

A first example of a device for applying a predetermined pattern onto a support means according to the present invention, from now on termed 'the device', is shown in FIGS. 1-4. A second examples of 'the device' is shown in FIGS. 5-8.

### EXAMPLE 1

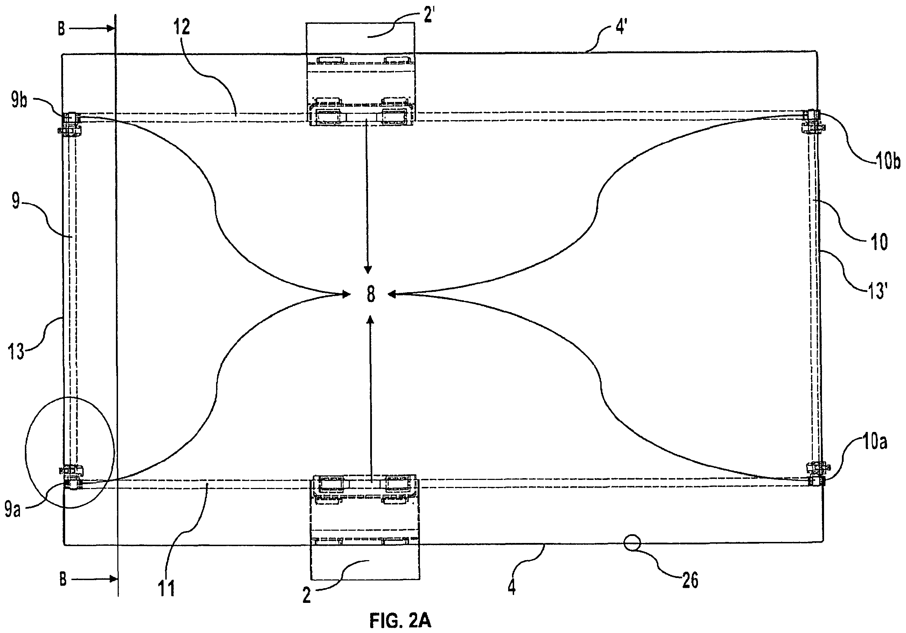

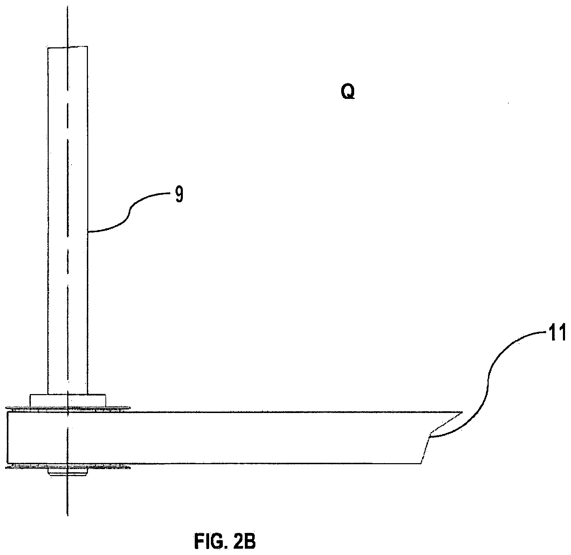

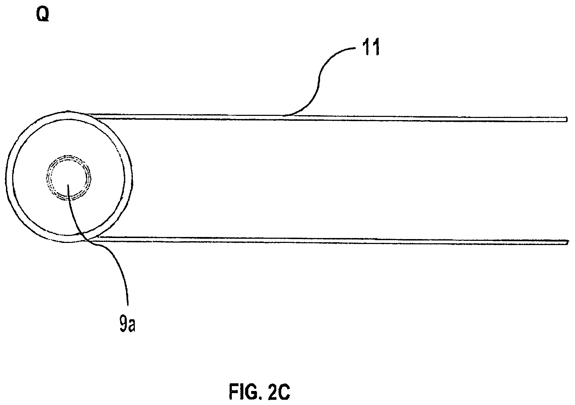

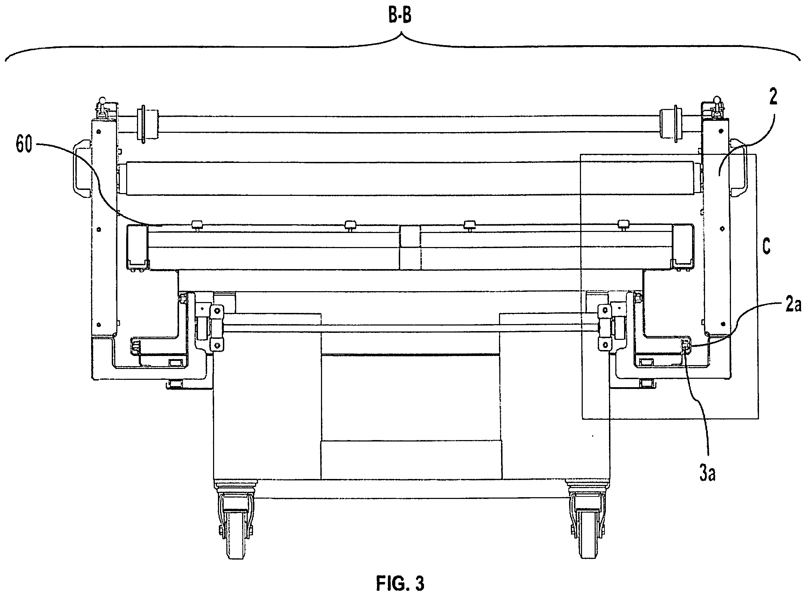

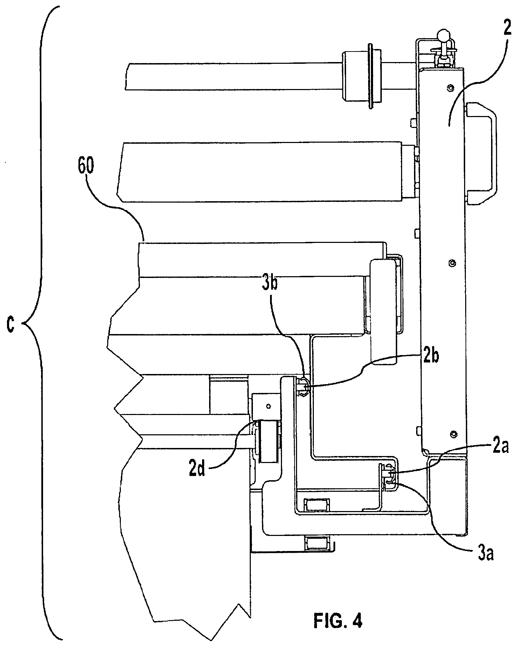

'The device' comprises a laminating table 1 having a flat laying out surface. The laminating table 1 comprises a frame 26 (FIG. 2). The flat laying out surface is created by one or more translucent plates 60 (FIGS. 3 and 4) which are supported by support elements 50 (FIG 1). The frame of the laminating table 1 comprises two long sides 4 and 4' which are substantially parallel to each other. At the long sides 4 and 4', two fixed control and carrier sections, 3 and 3' respectively, are arranged which in this example consist of especially formed plate material.

The fixed control and carrier section 3 comprises two rails 3a and 3b, for accommodating counterparts 2a and 2b (FIG. 4) of a first movable device 2. As can be seen from FIG 4, the rails 3a, 3b of the first fixed control and carrier section 3 have grooves opening sideways and facing inwardly and the counterparts are accommodated in the grooves, i.e. the counterparts are arranged inside the grooves. The shape of the groove resembles the letter "C". It can be understood that the counterparts accommodated in the rails cooperate with the rails so that they withstand against forces for detaching the counterparts and the rails from each other. When the press roll 6 is in the lower operative position 7b, forces in vertical direction are applied to the rail and the counterpart. The counterpart accommodated inside the rail withstands this vertical force and allows a strong pressure to be applied by the press roll 6. The movable devices 2 and 2' are stable both in the vertical direction and the horizontal direction during operation. Fixed control and carrier section 3' also has these rails 3'a and 3'b, which are shown in FIG 1B.

The first movable device 2 comprises means 2a and 2b (FIG. 4) and the first movable device 2 is arranged such that means 2a and 2b cooperate with rails 3a and 3b, respectively. This arrangement provides a stable and linear movement of the movable device 2 along the first long side 4 of the laminating table 1 (FIG 1A). Preferably, means 2a and 2b comprise bearings for smooth movement of the movable device, along long side 4.
A second movable device 2' is a mirror image of the first movable device and comprises the same components as the first movable device 2.

The device further comprises a press roll 6, which is movably arranged between the first movable device 2 and the second movable device 2'. The press roll 6 can freely rotate around its longitudinal axis. The press roll 6 can be moved from an upper inoperative position 7a to a lower operative position 7b, by simultaneously lowering the first end portion of the press roll 6a and the second end portion of the press roll 6b through slots 7' and 7 respectively, arranged in the second movable device 2' and the first movable device 2 respectively. The first end 6a of the press roll 6 is rotatably arranged on a device 6c which is arranged at the end of a pneumatic cylinder 25 (see FIG 1C). The same arrangement is provided for at the second end 6b of the press roll 6. The simultaneous moving operation of both ends of the press roll can be performed by a single action, by operating switch 2c or 2'c which is arranged on both movable devices 2 and 2', respectively. The vertical movement of the press roll from the upper to the lower position is controlled by pneumatic cylinders 25 of which one is shown in FIG 1C.

The device according Example 1 of the present invention comprises a transmission means 8. The transmission means comprises a first rotating member 9, a second rotating member 10. Both rotating members are operatively and movably connected to each other by a first transporting means 11 and a second transporting means 12 (best shown in FIG 2).
The first transporting means 11 is movably arranged to run over the first end portion 9a of the first rotating member 9 and the first end portion 10a of the second rotating member 10.
The second transporting means 12 is movably arranged to run over the second end portion 9b of the first rotating member 9 and the second end portion 10b of the second rotating member 10.
Rotating members 9 and 10 are arranged at the opposite short sides of the laminating table 1. The transporting means 11 and 12 are operatively connected to movable devices 2 and 2' respectively, by a clamping means (the connection between movable device 2 and transporting means 11 is shown in FIG 4, 2d).
The transporting means 11 and 12 may be an endless (toothed) belt, chain, ribbon, or rope. In this example the transporting means are toothed belts, that run over gear wheels arranged at the ends of the rotating members 9 and 10.

In this example the transmission means is arranged at the inside of the frame of the laminating table (see FIGS 1 and 2). The transmission means is not visible when seen from the top of the table except for the transparent part of the table. This means that, as can be understood from FIGs 1 and 2, no part of the transmission means 8 protrudes out of the frame of the laminating table 1 in the horizontal direction. This has an advantage that the operator of the device can come close to the table without contacting e.g. the transporting means 11 of the transmission means 8. Bearings may be provided for at the end of the rotating means, for enabling free rotation of the rotating means.

The transmission means works as follows:
When an operator moves movable device 2 along the first long side 4 of the laminating table 1, the transporting means 11 moves as well, because the movable device 2 is fixedly connected by clamping means 2d (FIG 4). The linear movement of the movable device is transformed into rotating movements of rotating members 9 and 10. Then the second transporting means 12 runs over the second ends 9b and 10b of the rotating members 9 and 10 respectively. Because the second movable device 2' is fixedly connected to the second transporting means 12 by a clamping means, similar to clamping means 2d, the second moveable device 2' moves along the second long side 4' of the laminating table 1. Thus by moving either one of the movable devices 2 or 2' along the first or second long side 4 or 4' respectively, the other movable device moves simultaneously, parallel and in the same direction.
In conventional laminating equipment, both movable devices were connected by a traverse beam arranged above the press roll 6, such that a bridge is formed. Upon moving the bridge along the table, either two operators are required to move the first and the second movable devices along the long edges of the laminating table, or the centre of the moving force must be exerted in the middle of the bridge (i.e. between the two movable devices) to prevent torsion in the bridge. The latter is rather difficult in the case of broad laminating tables (i.e. tables having a width exceeding approximately 2.5 times the length of an average human arm). Torsion of the bridge arrangement in conventional laminating tables may cause uneven running of the press roll over the substrate to be laminated, possibly creating shear forces between the substrate and the laminating foil. The resulting laminate may be of inferior quality.

The above described disadvantage of conventional laminating tables is overcome by a laminating table comprising the transition means according to the present invention as described above.

### EXAMPLE 2

The most important difference between the device according to example 1 and example 2 is the arrangement of the transmission means 8. All other parts are more or less the same as described before in example 1 and therefore not further discussed here. The numbers in FIGS 5-8 correspond to the description given in example 1.

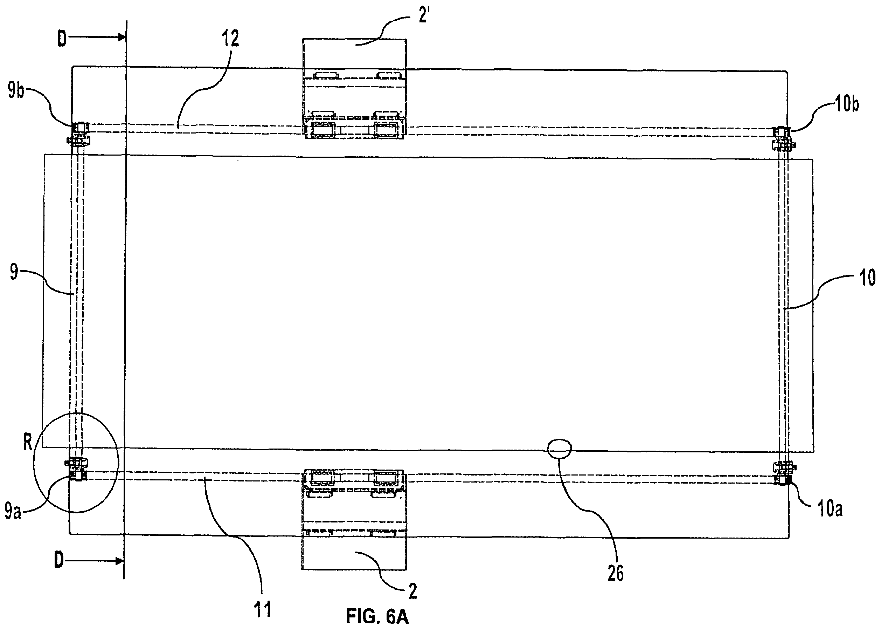

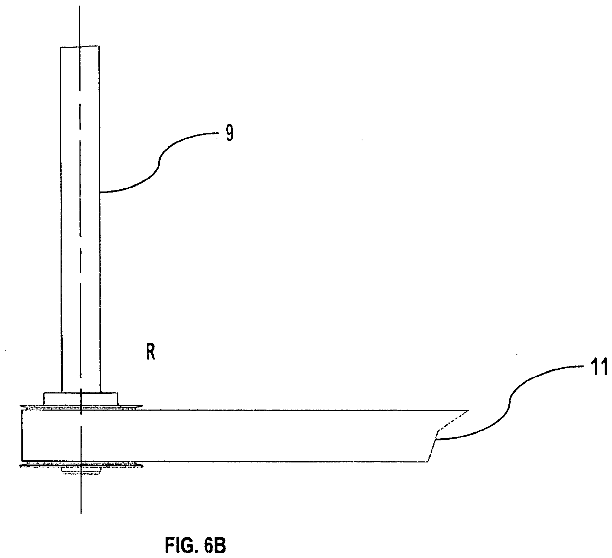

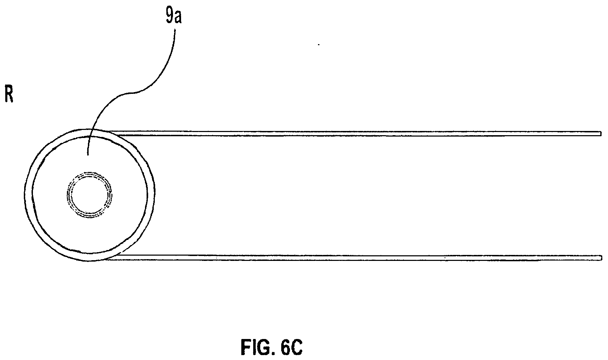

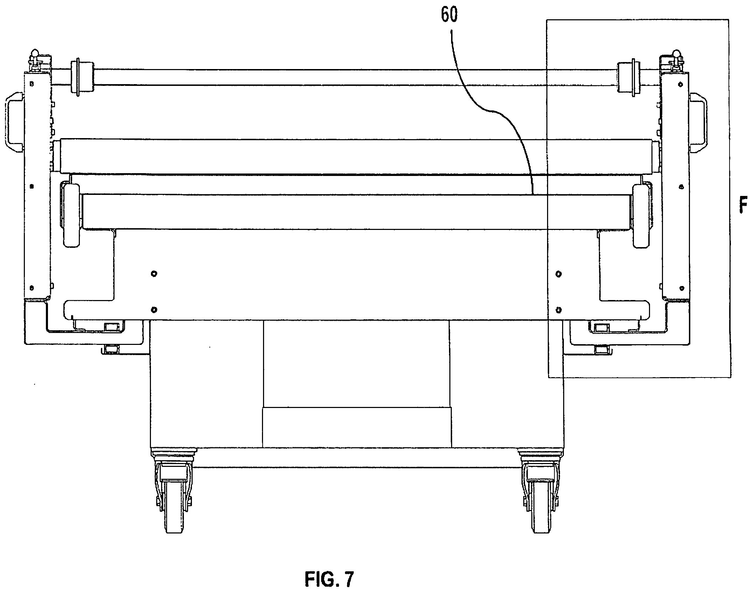

FIGS 6 and 7 show that the ends 9a, 9b, 10a and 10b of the rotating members 9 and 10 are located outside the frame of the laminating table 1. Thus, rotating members 9 and 10 are arranged through holes in the frame, optionally equipped with bearings for smooth rotation of the rotating members. Transporting means 11 runs over the first end 9a of rotating means 9 and over the first end 10a of rotating means 10. Transporting means 12 runs over the second end 9b of rotating means 9 and over the second end 10b of rotating means 10. The transporting means 11 and 12 are therefore also arranged outside the frame of laminating table 1.

In this example, the fixed control and carrier section 3 comprises a protrusion 3c arranged on the frame of the laminating table 1.
The first movable device 2 is fixedly connected to the first transporting means 11, by a clamping means similar to the clamping means of example 1.

The transmission means according to this example works in a similar way than is described in example 1.

The device optionally comprises extending arms 30, 31, 33 and 34, which are shown in FIG 5. The use of extending arms is however not limited to the device according to example 2 and may also be present in the device according to example 1. These extending arms can be used to extend the length of the laminating table 1. Large substrates to be laminated can be supported by a means 32, for example a roller, extending between the end of the first extending arm 30 and the end of the second extending arm 31. Extending arms 30 and 31 are arranged at the first short side 13 of the laminating table 1. Means 32 can also be used to hold a roll of laminating foil. A similar arrangement may be provided for at the second short side 13' of the laminating table 1, extending arms 33 and 34 and means 32, respectively.

When performing a laminating action, a substrate is placed on the flat surface of the laminating table 1. A predetermined pattern (e.g. printed on a foil comprising a printable surface and an adhesive back side provided with a backing foil and optionally a protecting laminating foil on top of the printed surface) is placed on top of the substrate with the image (predetermined pattern) facing upwards. The foil comprising the predetermined pattern and the substrate are aligned. The movable devices 2 and 2' are moved substantially to the middle of the image and the press roll (6) is lowered onto the laminating foil, exerting enough pressure to keep the foil and the substrate aligned and in place.

A first part of the foil comprising the predetermined pattern is folded over the press roll 6 and the backing foil is carefully cut and removed. Then the movable devices 2 and 2' are moved in a first direction, such that the first part of the laminating foil is fixed to the substrate. Then the movable devices are moved back to substantially the middle of the image, the second part of the foil comprising the predetermined pattern is folded over the press roll 6 and the remainder of the backing foil is removed. Finally, the movable devices 2 and 2' are moved in a second direction, such that the second part of the foil comprising the predetermined pattern is fixed to the substrate. It is also possible that the substrate comprises an adhesive layer and backing foil. In that case, the substrate is placed on the laminating table with the backing foil facing upwards. The above described process is carried out in a similar way. The only difference is that the backing foil must be removed from the substrate instead of the foil comprising the predetermined pattern.

When large patterns need to be applied to large surfaces, the backing foil may be removed during the movements of the movable devices 2 and 2' in the first and the second directions. The above described process may be repeated to apply one or more protective layers in the form of foils, especially when the predetermined pattern on a laminating foil does not have protective layers of itself.

## Claims

1. A device for applying a predetermined pattern onto a support means, the device comprising:
- a laminating table (1) having a flat laying-out surface;
- a first movable device (2) being moveably arranged at a first fixed control and carrier section (3), the first fixed control and carrier section (3) being arranged at a first long side (4) of the laminating table (1);
- a second movable device (2') being moveably arranged at a second fixed control and carrier section (3'), the second fixed control and carrier section (3') being arranged at a second long side (4') of the laminating table (1), the second long side (4') of the laminating table (1) being opposite and substantially parallel to the first long side (4) of the laminating table (1);
- a press device (5) movably arranged between the first movable device (2) and the second movable device (2'), the press device (5) comprising at least one press roll (6) rotatably journalled at its ends and operating and control means for moving the press roll between an upper inoperative position (7a) and a lower operative position (7b) in contact with the surface of the table and for controlling the pressure of the press roll against the table surface;
wherein the device comprises a transmission means (8) having a first rotating member (9) and a second rotating member (10) connected by a first transporting means (11) and a second transporting means (12); the first rotating member (9) being arranged at a first short side (13) of the laminating table (1) and substantially perpendicular to the first long side (4) of the laminating table (1); the first rotating member (9) having a first end portion (9a) and a second end portion (9b); the second rotating member (10) being arranged at a second short side (13') of the laminating table (1) and substantially parallel to the first rotating member (9); the second rotating member (10) having a first end portion (10a) and a second end portion (10b); the first transporting means (11) being moveably arranged to run over the first end portion (9a) of the first rotating member (9) and the first end portion (10a) of the second rotating member (10) and fixedly connected to the first movable device (2); the second transporting means (12) being moveably arranged to run over the second end portion (9b) of the first rotating member (9) and the second end portion (10b) of the second rotating member (10) and fixedly connected to the second movable device (2') and wherein at least one of the predetermined pattern or support means is self adhesive;
wherein the first fixed control and carrier section (3) comprises two rails (3a, 3b) for accommodating counterparts (2a) and (2b) of the first movable device (2) and the second fixed control and carrier section (3') comprises two rails (3'a, 3'b) for accommodating counterparts of the second movable device (2'); and
wherein the rails (3a, 3b) of the first fixed control and carrier section (3) and the rails (3'a, 3'b) of the second fixed control and carrier section (3') have grooves opening sideways and facing inwardly and the counterparts are accommodated in the grooves.

2. The device according to claim 1, wherein the first rotating member (9) and the second rotating member (10), comprise rotating elements being fixedly connected to the end portions (9a, 9b, 10a and 10b) of the first and second rotating members (9 and 10).

3. The device according to claim 2, wherein the rotating elements comprise gearwheels.

4. The device according to any one of the previous claims, wherein the first transporting means (11) and the second transporting means (12) are selected from the group consisting of: a belt, a toothed belt, a chain, a ribbon and a rope.

5. The device according to any one of the previous claims, wherein the flat laying-out surface of the laminating table (1) comprises at least two flat plates.

6. The device according to claim 5, wherein the at least two flat plates are made of a translucent material.

7. The device according to any one of claims 5 and 6, wherein the at least two flat plates are made of glass.

8. The device according to any one of claims 5-7, wherein each plate is supported by at least three supporting elements (50) and wherein at least one of the supporting elements (50) per plate is preferably adjustable for leveling the plate.

9. The device according to any one of the previous claims, comprising a first means for extending the length of the laminating table, comprising a first extending arm (30) and a second extending arm (31), both extending arms being movably arranged at the first short side (13) of the laminating table (1), the first means for extending the length of the laminating table optionally comprising a support means (32).

10. The device according to claim 9, comprising a second means for extending the length of the laminating table, comprising a third extending arm (33) and a fourth extending arm (34), both extending arms being movably arranged at the second short side (13') of the laminating table (1), the first means for extending the length of the laminating table optionally comprising a support means (35).

11. The device according to any one of the previous claims, comprising a first holder (40) arranged at the first movable device (2) and a second holder (40') arranged at the second movable device (2'), the first holder and the second holder being arranged for accommodating a third rotating member (41).

12. The device according to claim 11, wherein the third rotating member (41) comprises an axis for holding a roll of sheet material.

13. The device according to any one of the previous claims, wherein the transmission means (8) is arranged at the inside of the frame of the laminating table seen with a top view.

14. The device according to claim 1, wherein the shape of the grooves resembles the letter "C".

## Patentansprüche

1. Vorrichtung zum Aufbringen eines vorbestimmten Musters auf ein Stützmittel, wobei die Vorrichtung umfasst:
- einen Laminiertisch (1) mit einer flachen Ablegeoberfläche;
- eine erste bewegliche Vorrichtung (2), die beweglich an einem ersten feststehenden Steuer- und Trägerabschnitt (3) angeordnet ist, wobei der erste feststehende Steuer- und Trägerabschnitt (3) an einer ersten langen Seite (4) des Laminiertisches (1) angeordnet ist;
- eine zweite bewegliche Vorrichtung (2'), die beweglich an einem zweiten feststehenden Steuer- und Trägerabschnitt (3') angeordnet ist, wobei der zweite feststehende Steuer- und Trägerabschnitt (3') an einer zweiten langen Seite (4') des Laminiertisches (1) angeordnet ist, wobei die zweite lange Seite (4') des Laminiertisches (1) der ersten langen Seite (4) des Laminiertisches (1) entgegengesetzt und im Wesentlichen parallel dazu ist;
- eine Pressenvorrichtung (5), die zwischen der ersten beweglichen Vorrichtung (2) und der zweiten beweglichen Vorrichtung (2') beweglich angeordnet ist, wobei die Pressenvorrichtung (5) mindestens eine Presswalze (6), die an ihren Enden drehbar gelagert ist, und Bedien- und Regelmittel zum Bewegen der Presswalze zwischen einer oberen Außerbetriebsposition (7a) und einer unteren Inbetriebsposition (7b) in Kontakt mit der Oberfläche des Tisches und zum Regeln des Drucks der Presswalze gegen die Tischoberfläche umfasst;
wobei die Vorrichtung ein Übertragungsmittel (8) umfasst, das ein erstes Drehglied (9) und ein zweites Drehglied (10), die durch ein erstes Transportmittel (11) und ein zweites Transportmittel (12) verbunden sind, aufweist; wobei das erste Drehglied (9) auf einer ersten kurzen Seite (13) des Laminiertisches (1) und im Wesentlichen im rechten Winkel zu der ersten langen Seite (4) des Laminiertisches (1) angeordnet ist; wobei das erste Drehglied (9) einen ersten Endabschnitt (9a) und einen zweiten Endabschnitt (9b) aufweist; wobei das zweite Drehglied (10) auf einer zweiten kurzen Seite (13') des Laminiertisches (1) und im Wesentlichen parallel zu dem ersten Drehglied (9) angeordnet ist; wobei das zweite Drehglied (10) einen ersten Endabschnitt (10a) und einen zweiten Endabschnitt (10b) aufweist; wobei das erste Transportmittel (11) beweglich angeordnet ist, um über den ersten Endabschnitt (9a) des ersten Drehglieds (9) und den ersten Endabschnitt (10a) des zweiten Drehglieds (10) zu laufen, und fest mit der ersten beweglichen Vorrichtung (2) verbunden ist; wobei das zweite Transportmittel (12) beweglich angeordnet ist, um über den zweiten Endabschnitt (9b) des ersten Drehglieds (9) und den zweiten Endabschnitt (10b) des zweiten Drehglieds (10) zu laufen, und fest mit der zweiten beweglichen Vorrichtung (2') verbunden ist, und wobei mindestens eines von dem vorbestimmten Muster oder dem Stützmittel selbstklebend ist;
wobei der erste feststehende Regel- und Trägerabschnitt (3) zwei Schienen (3a, 3b) zum Aufnehmen von Gegenstücken (2a) und (2b) der ersten beweglichen Vorrichtung (2) umfasst und der zweite feststehende Regel- und Trägerabschnitt (3') zwei Schienen (3'a, 3'b) zum Aufnehmen von Gegenstücken der zweiten beweglichen Vorrichtung (2') umfasst; und
wobei die Schienen (3a, 3b) des ersten feststehenden Regel- und Trägerabschnitts (3) und die Schienen (3'a, 3'b) des zweiten feststehenden Regel- und Trägerabschnitts (3') Rillen aufweisen, die seitlich geöffnet und einwärts gewandt sind, und die Gegenstücke in den Rillen aufgenommen werden.

2. Vorrichtung nach Anspruch 1, wobei das erste Drehglied (9) und das zweite Drehglied (10) Drehelemente umfassen, die fest mit den Endabschnitten (9a, 9b, 10a und 10b) des ersten und des zweiten Drehglieds (9 und 10) verbunden sind.

3. Vorrichtung nach Anspruch 2, wobei die Drehelemente Zahnräder umfassen.

4. Vorrichtung nach einem beliebigen der vorhergehenden Ansprüche, wobei das erste Transportmittel (11) und das zweite Transportmittel (12) ausgewählt werden aus der Gruppe bestehend aus: einem Riemen, einem Zahnriemen, einem Band und einem Seil.

5. Vorrichtung nach einem beliebigen der vorhergehenden Ansprüche, wobei die flache Ablegeoberfläche des Laminiertisches (1) mindestens zwei flache Platten umfasst.

6. Vorrichtung nach Anspruch 5, wobei die mindestens zwei flachen Platten aus einem transluzenten Material hergestellt sind.

7. Vorrichtung nach einem beliebigen der Ansprüche 5 und 6, wobei die mindestens zwei flachen Platten aus Glas hergestellt sind.

8. Vorrichtung nach einem beliebigen der Ansprüche 5-7, wobei jede Platte durch mindestens drei Stützelemente (50) gestützt wird und wobei mindestens eines der Stützelemente (50) pro Platte vorzugsweise zur Höhenregulierung der Platte einstellbar ist.

9. Vorrichtung nach einem beliebigen der vorhergehenden Ansprüche, umfassend ein erstes Mittel zum Verlängern der Länge des Laminiertisches, umfassend einen ersten Verlängerungsarm (30) und einen zweiten Verlängerungsarm (31), wobei beide Verlängerungsarme beweglich an der ersten kurzen Seite (13) des Laminiertisches (1) angeordnet sind, wobei das erste Mittel zum Verlängern der Länge des Laminiertisches optional ein Stützmittel (32) umfasst.

10. Vorrichtung nach Anspruch 9, umfassend ein zweites Mittel zum Verlängern der Länge des Laminiertisches, umfassend einen dritten Verlängerungsarm (33) und einen vierten Verlängerungsarm (34), wobei beide Verlängerungsarme beweglich an der zweiten kurzen Seite (13') des Laminiertisches (1) angeordnet sind, wobei das erste Mittel zum Verlängern der Länge des Laminiertisches optional ein Stützmittel (35) umfasst.

11. Vorrichtung nach einem beliebigen der vorhergehenden Ansprüche, umfassend eine erste Halterung (40), die an der ersten beweglichen Vorrichtung (2) angeordnet ist, und eine zweite Halterung (40'), die an der zweiten beweglichen Vorrichtung (2') angeordnet ist, wobei die erste Halterung und die zweite Halterung zum Aufnehmen eines dritten Drehglieds (41) angeordnet sind.

12. Vorrichtung nach Anspruch 11, wobei das dritte Drehglied (41) eine Achse zum Halten einer Rolle von Folienmaterial umfasst.

13. Vorrichtung nach einem beliebigen der vorhergehenden Ansprüche, wobei in einer Draufsicht betrachtet das Übertragungsmittel (8) an der Innenseite des Rahmens des Laminiertisches angeordnet ist.

14. Vorrichtung nach Anspruch 1, wobei die Form der Rillen dem Buchstaben "C" ähnelt.

## Revendications

1. Dispositif pour l'application d'un motif prédéterminé sur un moyen de support, le dispositif comprenant :
- une table de stratification (1) présentant une surface d'exposition plane ;
- un premier dispositif mobile (2) disposé de façon mobile au niveau d'une première section de commande et de transport fixe (3), la première section de commande et de transport fixe (3) étant disposée au niveau d'un premier côté long (4) de la table de stratification (1) ;
- un deuxième dispositif mobile (2') disposé de façon mobile au niveau d'une deuxième section de commande et de transport fixe (3'), la deuxième section de commande et de transport fixe (3') étant disposée au niveau d'un deuxième côté long (4') de la table de stratification (1) étant opposé et substantiellement parallèle au premier côté long (4) de la table de stratification (1) ;
- un dispositif de compression (5) disposé de façon mobile entre le premier dispositif mobile (2) et le deuxième dispositif mobile (2'), le dispositif de compression (5) comprenant au moins un rouleau de compression (6) monté de façon rotative à ses extrémités et un moyen d'actionnement et de commande pour le déplacement du rouleau de compression entre une position de non fonctionnement supérieure (7a) et une position de fonctionnement inférieure (7b) en contact avec la surface de la table et pour la commande de la pression du rouleau de compression contre la surface de la table ;
dans lequel le dispositif comprend un moyen de transmission (8) comportant un premier élément rotatif (9) et un deuxième élément rotatif (10) reliés par un premier moyen de transport (11) et un deuxième moyen de transport (12) ; le premier élément rotatif (9) étant disposé au niveau d'un premier côté court (13) de la table de stratification (1) et substantiellement perpendiculairement au premier côté long (4) de la table de stratification (1) ; le premier élément rotatif (9) comportant une première partie d'extrémité (9a) et une deuxième partie d'extrémité (9b) ; le deuxième élément rotatif (10) étant disposé au niveau d'un deuxième côté court (13') de la table de stratification (1) et substantiellement parallèlement au premier élément rotatif (9) ; le deuxième élément rotatif (10) présentant une première partie d'extrémité (10a) et une deuxième partie d'extrémité (10b) ; le premier moyen de transport (11) étant disposé de façon mobile pour rouler par-dessus de la première partie d'extrémité (9a) du premier élément rotatif (9) et la première partie d'extrémité (10a) du deuxième élément rotatif (10) et relié fixement au premier dispositif mobile (2) ; le deuxième moyen de transport (12) étant disposé de façon mobile pour rouler par-dessus de la deuxième partie d'extrémité (9b) du premier élément rotatif (9) et la deuxième partie d'extrémité (10b) du deuxième élément rotatif (10) et relié fixement au deuxième dispositif mobile (2'), et au moins l'un parmi le motif prédéterminé et le moyen de support étant auto-adhésif ;
dans lequel la première section de commande et de transport fixe (3) comprend deux rails (3a, 3b) destinés à accueillir des parties correspondantes (2a) et (2b) du premier dispositif mobile (2) et la deuxième section de commande et de transport fixe (3') comprend deux rails (3'a, 3'b) destinés à accueillir des parties correspondantes du deuxième dispositif mobile (2') ; et
dans lequel les rails (3a, 3b) de la première section de commande et de transport fixe (3) et les rails (3'a, 3'b) de la deuxième section de commande et de transport fixe (3') comportent des rainures débouchant latéralement et tournées vers l'intérieur et les parties correspondantes sont accueillies dans les rainures.

2. Dispositif selon la revendication 1, dans lequel le premier élément rotatif (9) et le deuxième élément rotatif (10) comprennent des éléments rotatifs fixement reliés aux parties d'extrémité (9a, 9b, 10a et 10b) des premier et deuxième éléments rotatifs (9 et 10).

3. Dispositif selon la revendication 2, dans lequel les éléments rotatifs comprennent des roues dentées.

4. Dispositif selon l'une quelconque des revendications précédentes, dans lequel le premier moyen de transport (11) et le deuxième moyen de transport (12) sont sélectionnés à partir du groupe comprenant : une courroie, une courroie dentée, une chaîne, un ruban et une corde.

5. Dispositif selon l'une quelconque des revendications précédentes, dans lequel la surface d'exposition plane de la table de stratification (1) comprend au moins deux plaques planes.

6. Dispositif selon la revendication 5, dans lequel les au moins deux plaques planes sont constituées d'un matériau translucide.

7. Dispositif selon l'une quelconque des revendications 5 et 6, dans lequel les au moins deux plaques planes sont constituées de verre.

8. Dispositif selon l'une quelconque des revendications 5-7, dans lequel chaque plaque est supportée par au moins trois éléments de support (50) et dans lequel au moins l'un des éléments de support (50) par plaque est de préférence réglable pour mettre la plaque à niveau.

9. Dispositif selon l'une quelconque des revendications précédentes, comprenant un premier moyen d'extension de la longueur de la table de stratification, comprenant un premier bras d'extension (30) et un deuxième bras d'extension (31), les deux bras d'extension étant disposés de façon mobile au niveau du premier côté court (13) de la table de stratification (1), le premier moyen d'extension de la longueur de la table de stratification comprenant facultativement un moyen de support (32).

10. Dispositif selon la revendication 9, comprenant un deuxième moyen d'extension de la longueur de la table de stratification, comprenant un troisième bras d'extension (33) et un quatrième bras d'extension (34), les deux bras d'extension étant disposés de façon mobile au niveau du deuxième côté court (13') de la table de stratification (1), le premier moyen d'extension de la longueur de la table de stratification comprenant facultativement un moyen de support (35).

11. Dispositif selon l'une quelconque des revendications précédentes, comprenant un premier dispositif de maintien (40) disposé sur le premier dispositif mobile (2) et un deuxième dispositif de maintien (40') disposé sur le deuxième dispositif mobile (2'), le premier dispositif de maintien et le deuxième dispositif de maintien étant conçus pour accueillir un troisième élément rotatif (41).

12. Dispositif selon la revendication 11, dans lequel le troisième élément rotatif (41) comprend un axe destiné à maintenir un rouleau de matériau en feuille.

13. Dispositif selon l'une quelconque des revendications précédentes, dans lequel le moyen de transmission (8) est disposé sur le côté intérieur du châssis de la table de stratification, vu d'en haut.

14. Dispositif selon la revendication 1, dans lequel la forme des rainures ressemble à la lettre « C ».
